# EUROPEAN PATENT APPLICATION

(11) **EP 1 162 113 A2**
(43) Date of publication of application: **12.12.2001**
(21) Application number: 01113988.8
(22) Date of filing: 08.06.2001
(51) Int. Cl.: B60Q 1/14

(54) **Control device for user devices, in particular of motor vehicles**

(30) Priority: 09.06.2000 IT VE000026
(71) Applicant: FADIEL ITALIANA S.R.L., 30020 Marcon Venezia (IT)
(72) Inventor: Domeneghini, Fabio, 30020 Marcon - Venezia (IT)
(74) Representative: Piovesana, Paolo

(57) **Abstract**

A control device for user devices, characterised by comprising:
- a support (2) provided with an element (10) for activating a transmitter transmitting a plurality of signals through the ether,
- for the ether-transmitted signal, a receiver (14) connected to a microprocessor provided with a sequentiometer for the stepwise scanning of the user devices to be controlled,
- at least one activation/cancellation control member (12, 12') for the user device.

## Description

This invention relates to a control device for user devices, in particular of motor vehicles.

The various user devices of a motor vehicle (direction indicators, lights, horn, windscreen wipers, window wash liquid pump, etc.) are currently controlled by operating a corresponding control member (lever, pushbutton, switch) provided on the instrument panel and/or on the steering wheel of the vehicle.

This known operating system suffers however from the drawback that in order to activate the required user device, the corresponding control member has to be sought on the instrument panel and/or steering wheel and then be operated by the driver, which can distract from driving.

In the particular case of handicapped persons, this drawback increases substantially, and the system cannot in fact be used by persons with only one hand because to activate the user device that hand has to be removed from the steering wheel, with resultant danger.

To overcome this drawback, a knob connected to the steering wheel has been proposed, comprising an associated pushbutton unit with a plurality of pushbuttons, each connected to a corresponding user device.

This known system presents however certain drawbacks, and in particular:
- the danger of distraction to the driver while seeking the desired user device,
- difficulty in activating the pushbutton unit because this rotates together with the steering wheel,
- substantial danger to the driver if using an air bag,
- a bulky pushbutton unit, this bulk increasing with the number of pushbuttons present.

An object of the invention is to overcome this drawback by providing a device, in particular for motor vehicles, which enables all the user devices to be activated in a simple and comfortable manner.

This and further objects which will be apparent from the ensuing description are attained according to the invention by a control device for user devices as claimed in claim 1.

A preferred embodiment of the invention is described in detail hereinafter with reference to the accompanying drawings, in which:

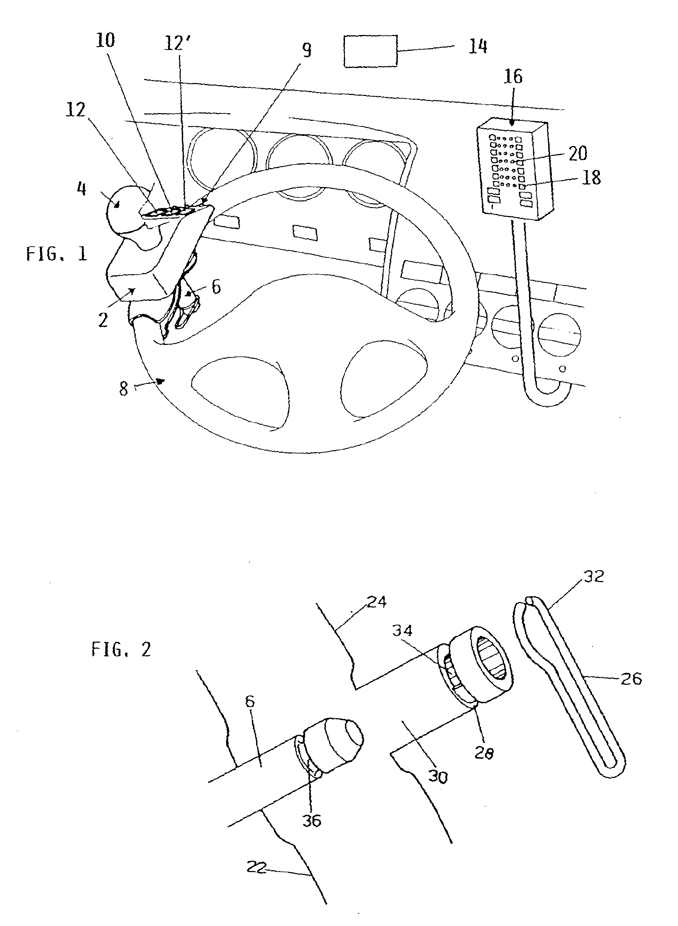

Figure 1 is a schematic view of a control device according to the invention;
Figure 2 is a detailed view of its connection to the steering wheel; and
Figure 3 shows a different embodiment thereof.

As can be seen from the figures, the control device of the invention comprises substantially a support 2 provided with a handgrip 4 pivoted to the steering wheel ring 8 by means of a pin 6.

The support 2 internally houses an infrared signal transmitter 9 which is provided with a direct current battery housed in the support and is activated by three pushbuttons 10, 12, 12'.

With the transmitter there is associated a receiver 14 connected to a microprocessor provided with a sequentiometer which scans the various user devices with a predetermined logic and is itself connected to a panel 16 which displays their state.

In particular, said display panel comprises a panel showing a plurality of symbols 18 relating to the corresponding user device, and each provided with LEDs which when lit indicates the selected user device (red) and its activation (green).

The microprocessor is connected by a multiconductor to a series of relays each connected to a corresponding user device.

The device is mounted on the steering wheel by the following procedure. The support 2 is secured to a first half-shell 22 which cooperates with a second half-shell 24 for their connection to the steering wheel 8, this connection being stabilized by an elastic clip 26 which engages in an annular groove 28 provided in a sleeve 30 rigid with the half-shell 24. The portion 32 of the clip 26 penetrates an aperture 34 in the annular groove 28 to enter an annular groove 36 provided in the pin 6, to securely connect the two half-shells together.

The device of the invention is used as follows:
the driver rests his hand on the handgrip 4 and with his finger operates the pushbutton 10 repeatedly so that the transmitter 9 feeds a repeated signal to the receiver. Continuing in this manner the microprocessor, via the sequentiometer, finally selects the desired user device (direction indicators, side lights, low beams, windscreen wipers), which is displayed by the lighting of the corresponding red LED 20.

When the desired user device has been located, the driver presses one of the two pushbuttons 12, 12' so that the transmitter feeds a further signal to the microprocessor to activate the user device (green LED) or to cancel it if already activated (on/off switching of the direction indicators, on/off switching of the lights, starting/stopping of the windscreen wipers, etc.).

If the vehicle is to be used by a non-handicapped person, the device can be easily removed by rotating the clip 26 until the portion 32 interferes with the annular surface of the groove 28, to disengage the band 36 and enable the half-shell 24 to be withdrawn from the pin 6.

After a predetermined time period the microprocessor automatically returns the scanning procedure to its commencement, to simplify selection of the desired user device by a driver who, knowing that after each selection the device returns to its initial state and knowing the sequence of user devices by memory, can select the desired user device by merely counting, without having to observe the display panel. The most frequently operated user devices are therefore preferably positioned in the initial positions of the utilization cycle.

For particular user devices, such as the horn and the window wash liquid pump, activation of the user device is achieved by continuous operation of one of the pushbuttons 12, 12', so that deactivation takes place only on releasing the pushbutton.

This is due to the fact that if activation were achieved by a single operation of the pushbutton, microprocessor resetting would require that user device to be again selected in order to cancel it.

In a preferred embodiment, not shown in the drawings, sequential selection of the user device is not achieved by repeated operation of the pushbutton 10, but by maintaining it pressed so that the microprocessor automatically selects the various user devices in sequence.

In this case, passage from one user device to the next can be accompanied by the emission of a sound signal, to enable the driver to recognize, by mentally counting, which user device is currently selected.

In a particular embodiment, for particular drivers with serious disabilities, several user devices can be activated in succession based on a preselected logic sequence with an automatic action established by the driver or installer. This sequence could for example be ignition, disengaging the parking brake, activating the direction indicator, switching on lights.

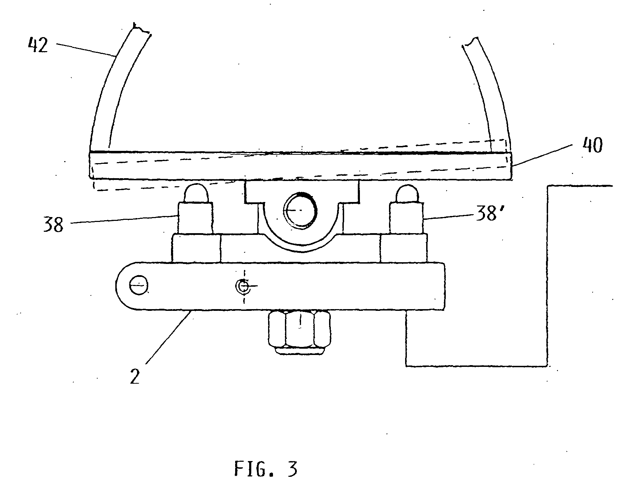

In the embodiment shown in Figure 3, the support 2 supports two pushbuttons 38, 38' selectively activatable by a rocker board 40 pivoted on the support 2 and having dimensions suitable for resting a hand thereon with its fingers widened.

To ensure that the driver's hand rests securely thereon, especially if suffering from very accentuated disabilities, the board is provided with a strap 42 or other clamping member for the hand.

The support 2 is preferably mounted in an ergonomic position, for example on a seat arm (not shown in the drawings) for comfortable operation by the driver.

The two pushbuttons 38, 38' activate the infrared signal transmitter associated with the receiver 14.

In this embodiment the device is operated by the driver resting his hand on the board, repeated rocking of which presses the corresponding pushbutton.

## Claims

1. A control device for user devices, **characterised by** comprising:
- a support (2) provided with an element (10) for activating a transmitter transmitting a plurality of signals through the ether,
- for the ether-transmitted signal, a receiver (14) connected to a microprocessor provided with a sequentiometer for the stepwise scanning of the user devices to be controlled,
- at least one activation/cancellation control member (12, 12') for the user device.

2. A device as claimed in claim 1, **characterised in that** the support is applied to the steering wheel ring.

3. A control device for user devices as claimed in claim 1, **characterised by** comprising a panel (16) displaying the user device currently selected during scanning, and also displaying the state of the user device.

4. A device as claimed in claim 1, **characterised in that** the transmitter transmits an infrared signal.

5. A device as claimed in claim 1, **characterised in that** the element which actuates the transmitter and the member which controls the activation/cancellation of the user device are pushbuttons (10, 12, 12', 38, 38').

6. A device as claimed in claim 1, **characterised by** comprising a pin (6) for its pivoting to the steering wheel.

7. A device as claimed in claim 1, **characterised in that** the support (2) comprises a first half-shell (22) cooperating with a second half-shell (24), to retain the steering wheel ring.

8. A device as claimed in claim 6, **characterised in that** the pin (6) is rigid with the first half-shell (22) and engages in a sleeve (30) provided on the second half-shell, an elastic clip (26) engaging a band (28) on the second half-shell and, through an aperture (34) provided in said band, a further bandk (36) provided on the first half-shell.

9. A device as claimed in claim 5, **characterised in that** with the two pushbuttons (38, 38') there is associated a rocker board (40), the ends of which act selectively on one of the two pushbuttons.

10. A device as claimed in claim 9, **characterised in that** the board (40) is provided with a clampling strap (42).
